# DEMANDE DE BREVET EUROPEEN

(11) **EP 0 686 409 A1**
(43) Date de publication de la demande: **13.12.1995**
(21) Numéro de dépôt: 95410045.9
(22) Date de dépôt: 15.05.1995
(51) Int. Cl.: A62C 5/02, B64D 1/18

(54) **Hélicoptère équipé d'un dispositif générateur de mousse, notamment pour la lutte contre les incendies**

(30) Priorité: 06.06.1994 FR 9407098
(71) Demandeur: Rey, Claude, F-84120 La Bastidonne (FR)
(72) Inventeur: Rey, Claude, F-84120 La Bastidonne (FR)
(74) Mandataire: Hecké, Gérard

(57) **Abrégé**

Un hélicoptère 20 est équipé d'un dispositif générateur de mousse 22 comprenant une citerne 1 associée à un système de pompage 2 et un organe proportionneur 36 pour délivrer un mélange eau-émulseur. Un système de projection 44 comporte deux modules 44a, 44b disposés sur les côtés latéraux à l'extérieur de l'hélicoptère 20, chaque module comprenant une armature 3 montée à pivotement autour d'un axe 6 entre une position inactive relevée, et une position active abaissée, et une ossature 4 en liaison avec la conduite de sortie de l'organe proportionneur 36. L'ossature 4 est disposée sous les pâles 46 de l'hélicoptère 20, et est conformée selon un quadrillage équipé d'une pluralité de gicleurs 5 susceptibles de diffuser le mélange eau-émulseur sur un filet 11 à mailles fines pour la production de la mousse sous l'action de l'air pressurisé généré par les pâles 46. Le déplacement des modules 44a, 44b entre les deux positions relevée et baissée est assuré par un dispositif de relevage 9 à commande hydraulique ou électrique. Application: lutte contre les incendies.

## Description

L'invention est relative à un hélicoptère pour la lutte contre les incendies, équipé d'un dispositif générateur de mousse, et comprenant des premiers moyens pour mélanger de l'eau avec un produit chimique d'émulsion ou émulseur sous pression, et des deuxièmes moyens à air pressurisé pour fabriquer une mousse à foisonnement variable à partir du mélange eau-émulseur, et pour appliquer une projection de ladite mousse sur le site de la zone d'incendie.

Il est classique de fabriquer la mousse au moyen d'un appareil injectant sur une grille un mélange d'eau avec un émulseur, l'air étant fourni à partir d'un ventilateur, ou d'un accumulateur à air comprimé. L'usage d'un ventilateur spécial, ou d'un accumulateur à air comprimé complique l'installation du dispositif générateur de mousse, et en augmente le poids, ainsi que le coût de revient et d'exploitation.

L'objet de l'invention consiste à réaliser un dispositif générateur de mousse pour hélicoptère dans lequel les opérations de production et de projection de la mousse sont améliorées.

Le dispositif générateur de mousse est caractérisé en ce que:
- les premiers moyens sont disposés à l'intérieur de l'hélicoptère, et comportent une citerne associée à un système de pompage et de mise sous pression, et à un organe proportionneur pour délivrer le mélange eau-émulseur,
- les deuxièmes moyens comprennent un système de projection à deux modules élémentaires disposés sur les côtés latéraux à l'extérieur de l'hélicoptère, chaque module comprenant une armature montée à pivotement autour d'un axe entre une position inactive relevée, et une position active abaissée, et une ossature en liaison avec la conduite de sortie de l'organe proportionneur,
- l'ossature est disposée sous les pâles de l'hélicoptère, et est conformée selon un quadrillage équipé d'une pluralité de gicleurs susceptibles de diffuser le mélange eau-émulseur sur un filet souple en matière synthétique, et à mailles fines pour la production de la mousse sous l'action de l'air pressurisé généré par les pâles,
- et le déplacement des modules entre les deux positions relevée et baissée est assuré par un dispositif de relevage à commande hydraulique ou électrique.

Les pâles de i'hélicoptère jouent avantageusement le rôle de ventilateur, ce qui favorise le foisonnement de la mousse à travers le filet. L'air pressurisé à l'aval des pâles permet également de fixer efficacement sur la zone à protéger, notamment des matériaux, des liquides inflammables, de la végétation non brûlée ou incandescente, un revêtement de mousse susceptible d'enrober les éléments de la zone pour ralentir la propagation de l'incendie.

Selon une autre caractéristique de l'invention, le filet en matériau souple synthétique, est suspendu sous l'armature par un deuxième dispositif de fixation à câbles. Le filet est entouré par une bâche souple et lestée, fixée à l'armature par des anneaux d'attache fendus, de manière à constituer un guide pour délivrer une projection uniforme de mousse.

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue en plan de l'hélicoptère équipé du dispositif générateur de mousse selon l'invention, la demi-vue supérieure représentant l'armature, et la demi-vue inférieure montrant l'ossature du système de projection;
- la figure 2 montre une vue de profil de la figure 1;
- la figure 3 représente une vue de face de l'hélicoptère, la demi-vue de gauche montrant l'hélicoptère en transit avec le module de projection en position relevée, la demi-vue de droite montrant l'hélicoptère dans l'état d'épandage de mousse en position abaissée du module;
- la figure 4 est une vue schématique du dispositif générateur de mousse de la figure 1.

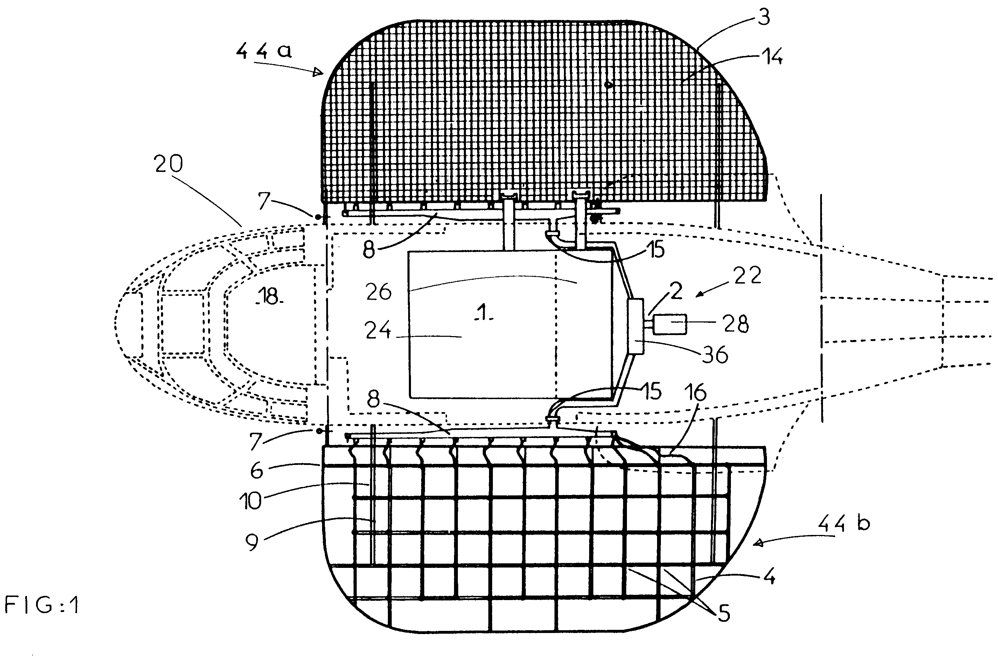

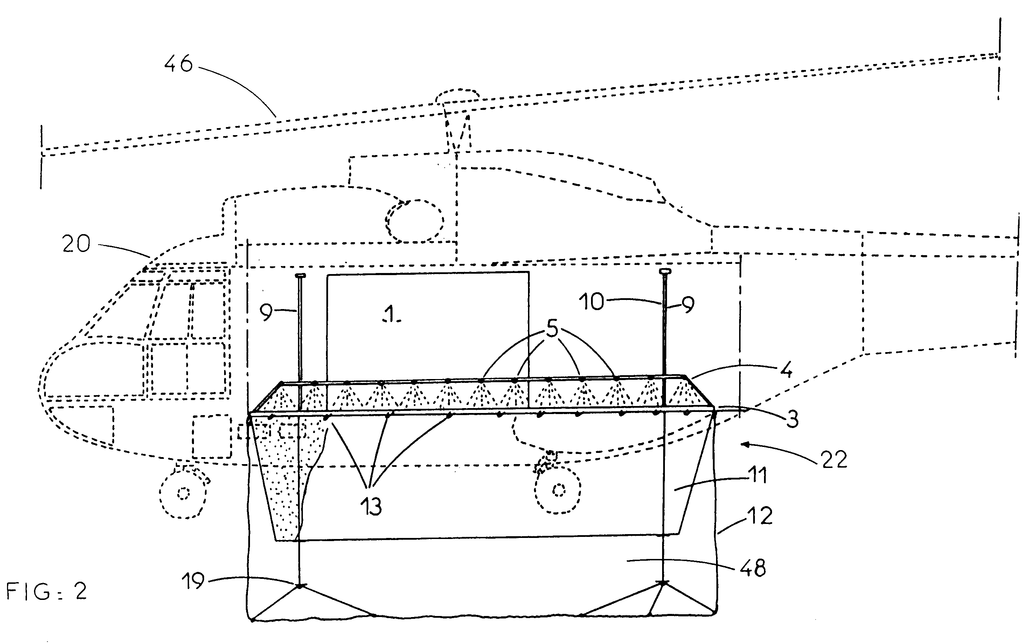

En référence aux figures 1 à 4, un hélicoptère 20 est équipé d'un dispositif générateur de mousse 22, utilisé notamment pour la lutte contre les feux de forêts ou autres incendies.

Le dispositif générateur de mousse 22 comporte une citerne 1 rigide et un système de pompage 2, tous deux agencés à l'intérieur de l'hélicoptère 20. La citerne 1 est cloisonnée en deux compartiments adjacents, formés par un premier compartiment 24 pour le remplissage d'eau, et un deuxième compartiment 26 contenant un produit chimique émulseur ou retardant court terme. Le remplissage de chaque compartiment 24, 26 s'effectue au moyen d'un tuyau ayant un raccord d'admission associé à un clapet anti-retour. Le volume de la citerne 1, et ses points d'ancrage et de centrage seront prescrits par le constructeur de l'hélicoptère, ainsi qu'un cloisonnement de type transport.

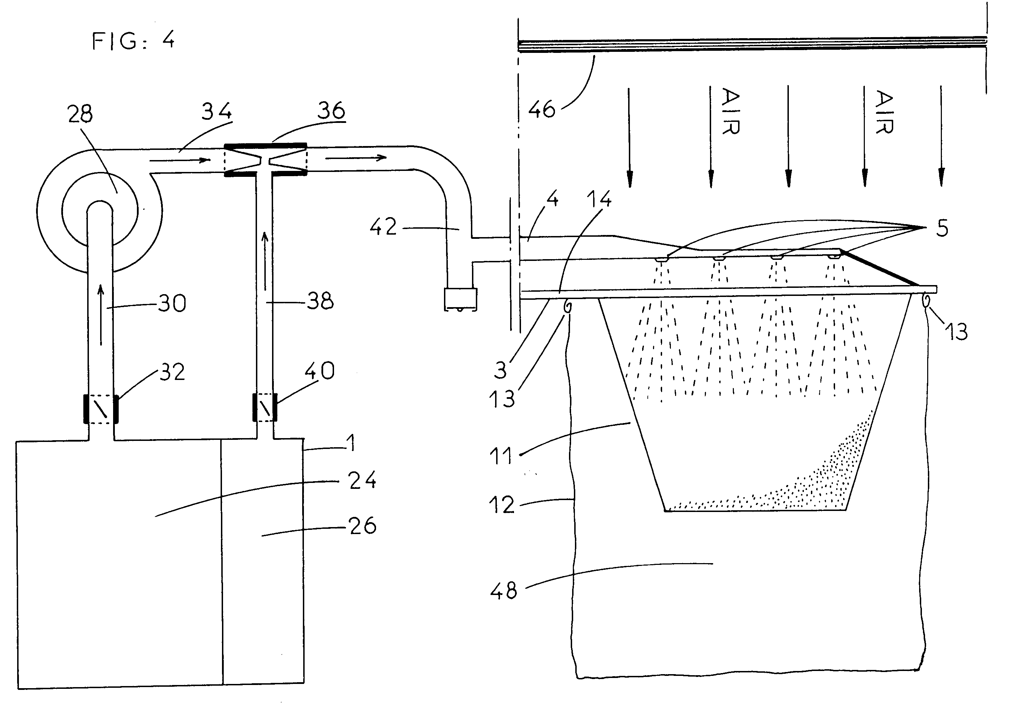

Le système de pompage représenté en détail sur la figure 4 est muni d'une pompe 28 ayant une tubulure d'admission 30 connectée au premier compartiment 24 par l'intermédiaire d'une première vanne de commande 32, et une tubulure de refoulement 34 branchée à un organe proportionneur 36. Le deuxième compartiment 26 est relié à l'organe proportionneur 36 au moyen d'une autre tubulure de liaison 38 équipée d'une deuxième vanne 40 de réglage, laquelle permet de contrôler le dosage de l'émulseur. Les différents éléments du système de pompage 2 peuvent être actionnés par des moyens de commande électrique, pneumatique ou hydraulique. L'organe proportionneur 36 génère le mélange eau-émulseur qui est envoyé dans une paire de conduites d'échappement 42.

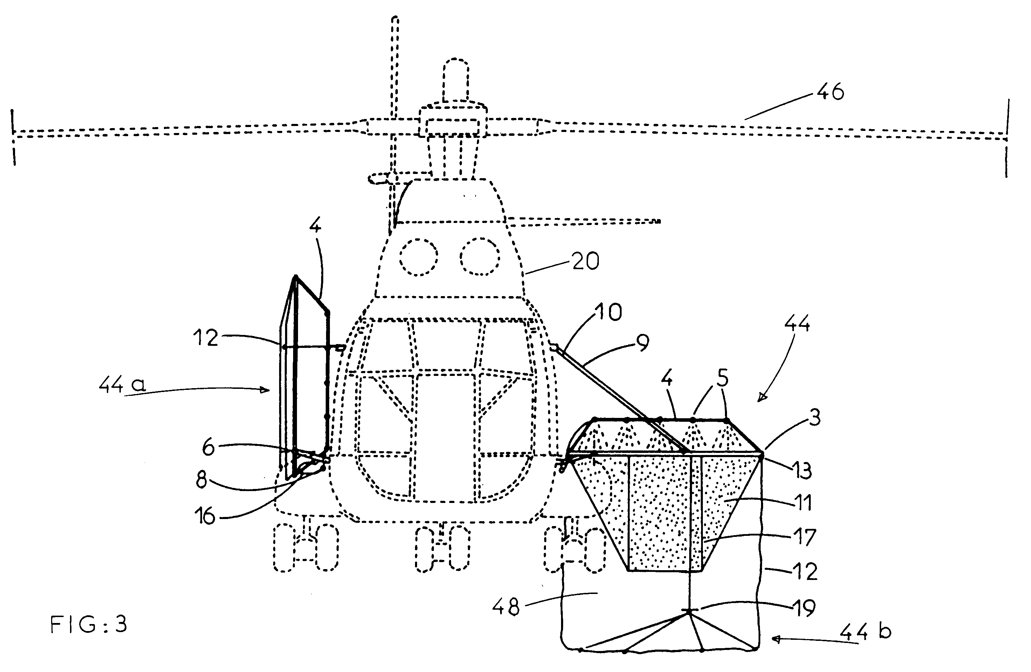

Le dispositif générateur de mousse 22 comprend en plus un système de projection 44 disposé sur les cotés latéraux opposés à l'extérieur de la cabine de l'hélicoptère 20. Le système de projection 44 est doté de deux modules élémentaires 44a, 44b, de structures identiques, et disposés symétriquement par rapport au plan médian. Chaque module 44a, 44b, comporte une armature 3 en métal léger et résistant, montée à pivotement autour d'un axe 6 entre une position inactive relevée (figure 3, demi-vue de droite), et une position active abaissée (figure 3, demi-vue de droite), L'axe 6 s'étend parallèlement par rapport au plan médian longitudinal, et permet de ranger le module 44a, 44b, contre la carlingue de l'hélicoptère pour éviter la diminution des paramètres aéronautiques lorsque l'hélicoptère est en vol de transit.

Une grille 14 à grosses mailles est fixée sur l'armature 3, et au-dessus de la grille 14 se trouve une ossature 4 comprenant une pluralité de tubes de dérivation raccordés à une rampe d'alimentation 8 commune, laquelle se trouve en liaison avec la conduite de sortie 42 correspondante. Les tubes de dérivation de l'ossature 4 forment un quadrillage (figure 1), et à chaque intersection est associé un gicleur 5 calibré destiné à diffuser une fraction du mélange eau-émulseur sur un angle voisin de 45°. La distance séparant l'ossature 4 de la grille 14 inférieure est environ de 300 mm. Un raccord 15 rapide permet de relier la conduite d'échappement 42 à la rampe d'alimentation 8 pour faciliter le démontage du système de projection 44.

L'armature 3 est attachée à la carlingue de l'hélicoptère 20 par un premier dispositif de fixation à câbles 10, la longueur des câbles 10 étant ajustée à une dimension prédéterminée, permettant de maintenir chaque module 44a, 44b, dans la position active abaissée, dans laquelle l'armature 3 s'étend orthogonalement au plan médian passant par l'axe du rotor.

L'ossature 4 est branchée à la rampe d'alimentation 8 fixe par des tuyaux souples 16 pour autoriser le repliement des modules 44a, 44b vers la position relevée. Le système de projection 44 est fixé à la cabine par des moyens d'assemblage 7 permettant le montage et le démontage rapide des modules 44a, 44b.

Un filet 11 souple, en matériau synthétique est suspendu par un deuxième dispositif de fixation à câbles 17 sous l'armature 3, et comporte une structure à mailles fines susceptible de générer une multitude de bulles suite à l'action de l'air pressurisé sur le mélange eau-émulseur en provenance des gicleurs 5.

L'air pressurisé est fourni par les pâles 46 de l'hélicoptère, jouant le rôle de ventilateur pour chasser automatiquement le mélange eau-émulseur à travers les mailles du filet 11 pour le foisonnement de la mousse dans l'espace de projection 48. Le filet 11 est entouré par une bâche 12 souple en polyéthylène, fixé à l'armature 3 par des anneaux d'attache 13 fendus, facilitant l'arrachement de la bâche 12 en cas d'incident. Le foisonnement de la mousse est variable en fonction de la nature et du dosage de l'émulseur.

La présence de la bâche 12 autour du filet 11 constitue un guide pour produire une projection uniforme et précise de mousse, et en évitant toute dispersion trop large. La partie inférieure de la bâche 12 peut être lestée, et un dispositif de relevage 9 à câbles est associé à une bague d'arrêt 19 pour remonter successivement le filet 11, l'armature 3 et l'ossature 4.

Un treuil (non représenté) est associé au dispositif de relevage 9 pour assurer les manoeuvres de déploiement et de remontée des éléments constitutifs de chaque module 44a, 44b. L'actionnement du treuil peut être opéré par des moyens hydrauliques ou électriques, en étant accouplés éventuellement à un mécanisme manuel de secours.

Le dispositif de relevage 9 coopère avec des moyens de sécurité destinés à briser la liaison mécanique pour larguer la bâche 12 et le câble en cas d'incident. Les moyens de sécurité peuvent être réalisés par des goupilles tarées à la rupture, ou par tout autre élément mécanique équivalent.

L'ensemble des commandes, notamment du dispositif de relevage 9, de mise en route du système de pompage 2, de réglage de la deuxième vanne 40 de l'émulseur, sont raccordées à des manettes du poste de pilotage 18 en fonction des prescriptions du constructeur de l'hélicoptère.

Le produit chimique d'émulsion contenu dans le deuxième compartiment 26 de la citerne 1 est un liquide contenant un agent retardant court terme, vendu dans le commerce sous différentes marques, par exemple: FIRE-TROL, FIRE-FOAM 103 de la société CHEMONICS INDUSTRIES INC., OU POLYTROL de la société BIOGENA.

Il est également possible d'utiliser un émulseur en poudre à base d'un agent retardant long terme. Tout autre produit peut bien entendu être utilisé en fonction de la mission de l'hélicoptère.

La mise en oeuvre du dispositif générateur de mousse 22 fonctionne de la manière suivante:

Pendant la phase de transit, la citerne 1 de l'hélicoptère 20 est chargée avec de l' eau et un émulseur spécifique en fonction de la nature et du lieu de l'incendie. Les deux modules 44a, 44b du système de projection 44 se trouvent plaqués en position relevée (figure 3, gauche), pour ne pas entraver la vitesse du déplacement de l'hélicoptère 20. La bâche 12 peut être attachée en plus par des sangles pour éviter le claquage au vent.

Lorsque l'hélicoptère 20 atteint la zone de l'incendie, I'équipage enlève les sangles et commande le déploiement des modules 44a, 44b en abaissant le dispositif de relevage 9. Le mouvement d'actionnement entraîne d'abord l'armature 3 et l'ossature 4 jusqu'à ce que le premier dispositif de fixation à câbles 10 les retienne dans la position abaissée. Puis le filet 11 et la bâche 12 sont déployés vers le bas jusqu'à la position finale (figure 3, droite).

La mise en route du système de pompage 2 après le dosage de l'émulseur permet ensuite de traiter la végétation de la zone d'incendie. Le survol de cette zone s'effectue en fonction des conditions de l'aérologie, du relief, et de la densité de la végétation. La projection de mousse par l'hélicoptère permet de fixer sur la zone à protéger, un revêtement de mousse pour ralentir la propagation de l'incendie. La fixation de la mousse sur les éléments de la zone est optimum grâce à la pression de l'air sous les pâles 46 de l'hélicoptère 20.

Lorsque la citerne 1 est vide, le système de pompage 2 est mis hors service, et les modules 44a, 44b du système de projection 44 sont remis dans la position relevée au moyen du dispositif de relevage 9 L'hélicoptère pourra ensuite rejoindre la zone d'emport pour procéder au remplissage en eau et en émulseur.

L'hélicoptère 20 est à nouveau opérationnel lorsque le plein des deux compartiments 24, 26 de la citerne 1 est terminé.

il est clair que le système de relevage à câble 9 pouvait être remplacé par un mécanisme articulé à biellettes, et par tout autre système de transmission mécanique ou hydraulique.

## Revendications

**1.** Hélicoptère pour la lutte contre les incendies, équipé d'un dispositif générateur de mousse (22) et comprenant des premiers moyens pour mélanger de l'eau avec un produit chimique d'émulsion ou émulseur, et des deuxièmes moyens à air pressurisé pour fabriquer une mousse à foisonnement variable à partir du mélange eau-émulseur, et pour appliquer une projection de ladite mousse sur le site de la zone d'incendie, caractérisé en ce que:
- les premiers moyens sont disposés à l'intérieur de l'hélicoptère (20) et comportent une citerne (1) associée à un système de pompage (2), et à un organe proportionneur (36) pour délivrer le mélange eau- émulseur,
- les deuxièmes moyens comprennent un système de projection 44 à deux modules élémentaires (44a, 44b) disposés sur les côtés latéraux à l'extérieur de l'hélicoptère (20), chaque module comprenant une armature (3) montée à pivotement autour d'un axe (6) entre une position inactive relevée, et une position active abaissée, et une ossature (4) en liaison avec la conduite de sortie (42) de l'organe proportionneur (36),
- l'ossature (4) est disposée sous les pâles (46) de l'hélicoptère (20), et est conformée selon un quadrillage équipé d'une pluralité de gicleurs (5) susceptibles de diffuser le mélange eau-émulseur sur un filet (11) à mailles fines pour la production de la mousse sous l'action de l'air pressurisé généré par les pâles (46),
- et le déplacement des modules (44a, 44b) entre les deux positions relevée et abaissée est assuré par un dispositif de relevage (9) à commande hydraulique ou électrique.

**2.** Hélicoptère selon la revendication 1, caractérisé en ce que l'armature (3) de chaque module (44a, 44b) est attachée à la carlingue de l'hélicoptère (20) par un premier dispositif de fixation (10) à câbles, agencé pour maintenir le module dans la position active abaissée, dans laquelle l'armature s'étend sensiblement orthogonalement au plan médian passant par l'axe du rotor d'entraînement des pâles (46).

**3.** Hélicoptère selon la revendication 1, caractérisé en ce que le filet (11) en matériau souple synthétique, est suspendu sous l'armature (3) par un deuxième dispositif de fixation (17) à câbles.

**4.** Hélicoptère selon la revendication 3, caractérisé en ce que le filet (11) est entouré par une bâche (12) souple et lestée, fixée à l'armature (3) par des anneaux d'attache (13), de manière à constituer un guide pour délivrer une projection uniforme de mousse.

**5.** Hélicoptère selon la revendication 1, caractérisé en ce que les tubes de dérivation de l'ossature (4) sont branchés à une rampe d'alimentation (8) fixe par des tuyaux souples (16), autorisant le repliement des modules (44a, 44b) vers la position relevée.

**6.** Hélicoptère selon la revendication 4, caractérisé en ce que le dispositif de relevage (9) est agencé pour que le mouvement de déploiement de chaque module (44a, 44b) vers la position abaissée provoque l'entraînement successif de l'ensemble armature (3) et ossature (4), puis du filet (11) et de la bâche (12).

**7.** Hélicoptère selon la revendication 6, caractérisé en ce que le dispositif de relevage (9) est associé à une bague d'arrêt (19) pour relever successivement la bâche (12), le filet (11), l'armature (3) et l'ossature (4), et pour plaquer le module (44a, 44b) contre l'hélicoptère (20) dans ladite position relevée.

**9.** Hélicoptère selon la revendication 1, caractérisé en ce que le dispositif de relevage (9) est associé à un treuil piloté par des moyens hydrauliques ou électriques, et par un mécanisme manuel de secours.

**10.** Hélicoptère selon la revendication 1, caractérisé en ce que le système de projection (44) est fixé à la cabine par des moyens d'assemblage (7) permettant le montage et le démontage rapide des modules (44a, 44b).
